(19) Europäisches Patentamt
European Patent Office
Office européen des brevets

(11) **EP 1 234 453 B1**

(12) **EUROPEAN PATENT SPECIFICATION**

(45) Date of publication and mention
of the grant of the patent:
**02.07.2008 Bulletin 2008/27**

(51) Int Cl.:
***H04Q 7/38*** (2006.01)

(21) Application number: **00983620.6**

(86) International application number:
**PCT/SE2000/002393**

(22) Date of filing: **30.11.2000**

(87) International publication number:
**WO 2001/043451 (14.06.2001 Gazette 2001/24)**

(54) **METHOD IN A TELECOMMUNICATION SYSTEM**

VERFAHREN IN EINEM TELEKOMMUNIKATIONSSYSTEM

PROCEDE RELATIF A UN SYSTEME DE TELECOMMUNICATION

(84) Designated Contracting States:
**AT BE CH CY DE DK ES FI FR GB GR IE IT LI LU MC NL PT SE TR**

(30) Priority: **10.12.1999 SE 9904526**

(43) Date of publication of application:
**28.08.2002 Bulletin 2002/35**

(73) Proprietor: **TELEFONAKTIEBOLAGET LM ERICSSON (publ)**
**164 83 Stockholm (SE)**

(72) Inventor: **BERGQVIST, Jens**
**S-582 37 Linköping (SE)**

(74) Representative: **Kühn, Friedrich Heinrich**
**Ericsson AB**
**Patent Unit Radio Networks**
**164 80 Stockholm (SE)**

(56) References cited:
**WO-A1-99/45735        WO-A1-99/45736**
**WO-A1-99/51047        GB-A- 2 173 377**
**GB-A- 2 260 242**

## Description

## FIELD OF THE INVENTION

The present invention relates generally to methods of congestion control in telecommunication systems, more particularly to provide methods of congestion control when setting up calls in a CDMA-based communication systems.

## BACKGROUND OF THE INVENTION

In code division multiple access (CDMA) communication systems, a plurality of base stations cover each certain geographic areas and provide communication services to users within said cells. More precisely, said coverage area is subdivided into cells which denote the area that is covered by a specific antenna transmitting and receiving at a specific frequency carrier. With respect to the capacity of a cell, there are i.a. two parameters in a CDMA-based communication system that affect the capacity of the radio network. One parameter is the uplink interference received by the radio base station. Another parameter is the downlink power that is sent out by the radio base station.

Characteristic for CDMA-systems is that for each cell the common transmission medium is shared between different users by assigning specific and unique code sequences to the uplink and downlink channels between base station and user equipment. These code sequences are used by the transmitters to transform signals into wideband spread spectrum signals. In the receiver units, either the base station or the user equipment, said wideband signals from a specific transmitter are retransformed to the original bandwidth by using the same code sequence as that transmitter while signals marked with different codes remain wideband signals and, thus, are interpreted by the receiver as part of the background noise.

An aspect specific to the multiple access technique used in CDMA relates to the fact that all users transmit wideband signals potentially at the same time and using the same bandwidth. Thus, one limiting factor in CDMA-based systems is a decreasing signal-to-noise ratio in the communication channels due to an increasing interference level caused by other transmitters. For the uplink, said interference level is the sum of all radio beams that reach the receiver of a radio base station for a specific frequency carrier. The source of these radio signals are the user equipments that are located in the cells handled by the specific radio base station or in neighbouring cells handled by another radio base station. Additional pseudo noise contributes also to the received interference level.

From this it becomes apparent that power control, both of uplink signals and downlink signals, is crucial in order to achieve a maximised system capacity and high quality of services. This implies for the uplink channels that the transmission power for each of the user equipment must be controlled in order to avoid, e.g., that users close to their serving base station dominate over users at a longer distance and in order to allow an optimised number of users within the limitations of the acceptable interference level. Accordingly, one important function in a CDMA-based communication system is the radio capacity control function that keeps track of the uplink interference level and, in case of a congestion in the radio interface, takes the necessary actions to lower the interference level. The call handling control will, during a call setup, check with the capacity control if the interference level permits the addition of a new call within a specific cell. Congestions in a cell, e.g. due to a too high number of user equipments in the cell, are prohibited by broadcasting access restriction messages for a cell. In a first approach new requests for a call setup are generally restricted in the congested cell. However, this would result in a poor system performance because a call setup would possibly be allowed in another cell within the accessible area of the user equipment. Yet another problem results from the fact that neighboured cells can use the same carrier frequency.

The document GB 2 260 242 A discloses a base station which ascertains whether a received service request from a mobile station can be accepted according to the availability of voice channels in the base station and, if the request cannot be accepted, compares a measured signal strength of the service request with at least one threshold value. If the signal strength exceeds the threshold, the mobile station is directed to retry the service request on one or more of a first set of channels assigned to neighbouring base station. Otherwise, the mobile station is directed to retry the service request on one or more of at least a second set of channels assigned to neighbouring base stations.

## SUMMARY OF THE INVENTION

It is an overall object of the present invention to optimise the communication capacity of a cell in a CDMA-based communication system having a high interference level by controlling the admission of new calls in case of a congestion for a certain frequency carrier in a cell such that the total interference level does not exceed a certain maximum power level.

According to the present invention, a call setup request from a user equipment in a congested cell is prohibited by means of broadcasted call admission messages. However, the call admission information indicates permitted and/or restricted accesses for carrier frequencies and/or neighboured cells. Neighboured cells using the same carrier frequency as the congested cell are marked with a restricted access flag. Therefore, the user equipments in the congested cell will request for a call setup only in one of those neighbour cells without access restrictions. By this means, the user equipments will not contribute to the interference level in the congested cell.

It is an advantage of the present invention that a call setup is possible for a user equipment located in a congested cell without increasing the total interference level in said congested cell.

It is another advantage of the present invention that the interference level that is experienced by a user equipment can be controlled such that the signal-to-interference ratio is sufficiently large.

It is still another advantage of the present invention that the number of user equipments in a cell can be increased while at the same time providing an acceptable service quality.

Other objects, advantages and novel features of the invention will become apparent from the following detailed description of the invention when considered in conjunction with the accompanying drawings and claims.

## BRIEF DESCRIPTION OF THE DRAWINGS

For a better understanding, reference is made to the following drawings and preferred embodiments of the invention.

Figure 1 shows an overview of the parts of a CDMA-based communication system that are the object of the method according to the present invention.

Figure 2 shows a flowchart presenting the main steps of the method according to the present invention from the point of view of a radio base station.

Figure 3 shows a flowchart presenting the main steps of the method according to the present invention from the point of view of a user equipment.

Figure 4 illustrates the method according to the present invention by means of an example for a user equipment within a cell structure.

## DETAILED DESCRIPTION

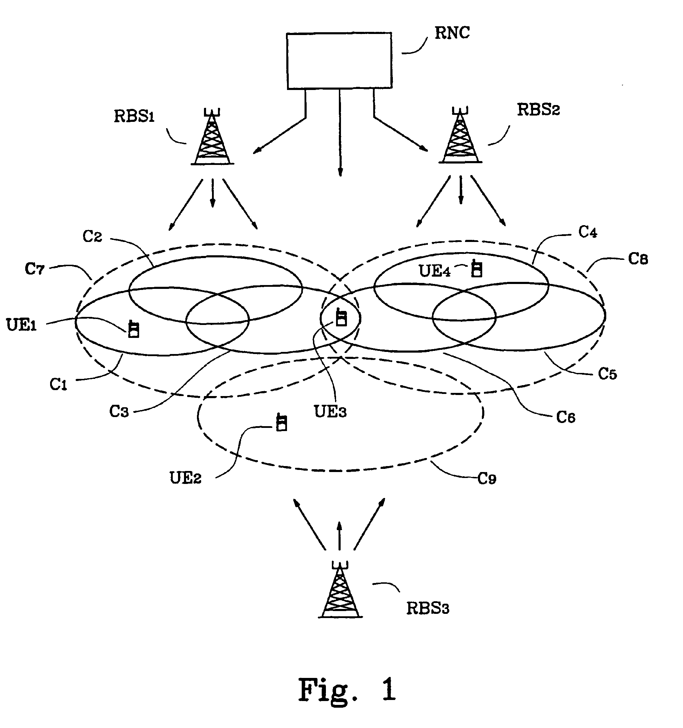

In Figure 1 a geographical area is covered by a plurality of cells whereby one or more cells are served by a radio base station. In particular, each cell is covered by means of one of the antennas of said radio base stations sending and receiving at certain carrier frequencies. Thus, a cell can be described by its cell identification together with the carrier frequencies that are used in the cell. Said carrier frequencies are assigned to and administered by various system operators to which a certain number of carrier frequencies has been assigned and which are used for cell planning of said operators network. In the example according to figure 1, an operator administers a radio communication system of the CDMA-type including a number of radio base stations $RBS_1$-$RBS_3$ whereof each of these radio base stations is covering at least one cell. In a CDMA-system of the above kind, the operator may administer, e.g., two allocated carrier frequencies $f_1$ and $f_2$. The radio communication is achieved by sending coded messages (speech or data or both) as codes on the carrier frequency which has been allocated for the cell where the user equipment is located. In this example, the first carrier frequency $f_1$ is allocated to cells $C_1$-$C_6$ and the second carrier frequency is allocated to cells $C_7$-$C_9$. It is seen from the figure that parts of said cells are overlapping each other or include each other such that the same geographical area can be covered by various cell structures operating on different carrier frequencies.

User equipments $UE_1$..$UE_4$ that are distributed over said operational area can perform communication services by means of dedicated uplink and downlink channels to and from an antenna of at least one radio base station ($RBS_1$-$RBS_3$). Hereby, each user equipment in a cell is normally connected to the radio base station that best receives the radio signals from the user equipment. At cell borders, however, a user equipment is probably in a soft handover situation, i.e. at the same time connected to at least two cells using the same carrier frequency.

A larger number of cells covering a certain area is connected to a centralised controller unit, e.g. a radio network controller RNC. This controller unit handles amongst other things functions for call handling control and capacity control within the cells. Said controller unit also keeps track on information that is necessary for operations concerning several cells, e.g., soft handover or cell access restrictions.

The present invention relates to a method in a cell of a radio base station in order to achieve a maximised number of user equipments within said cell and in order to avoid a too high interference level in a cell. Each user equipment in a cell interprets the transmissions to and from other user equipments as interference and, thus, intends to send at a power level that provides a sufficiently high signal-to-interference ratio. For the uplink channel of a user equipment UEj that contributes with an uplink power $P_j$ said ratio can be expressed as:

$$ SIR_j = P_j \left/ \sum_{\substack{i=1 \\ i \neq j}}^{N} P_i \right. . $$

However, the uplink power demand $P_j$ of a user equipment is not a static quantity but changes constantly depending on, e.g., the location of a user equipment with regard to its distance to the receiving antenna of a radio base station or depending on varying environment conditions. Yet another important impact results from the number of other user equipments that simultaneously have or request for a communication connection within the cell and from the kind of service that said users request for. Both the radio base station and each user equipment have a limited transmission power. As the user equipments control their uplink transmission power only with regard to their own needs, it becomes apparent that there is a risk for a steadily increasing uplink power level. Therefore, the total transmission power level from all uplink channels, i.e. the interference level, must not exceed a certain threshold value Pthr in order to provide on the one hand an acceptable quality of service, i.e. a sufficiently high signal-to-interference ratio, to a maximised number of user equipments and on the other hand to keep the total allocated downlink power of the radio base station below said threshold level. A congestion in a cell is determined if the total uplink interference level that a user equipment experiences in the cell exceeds said threshold value. A determined congestion must be resolved by means of decreasing the total uplink transmission power level or, as suggested by the method according to the present invention, by means of restricting access for new call setup requests.

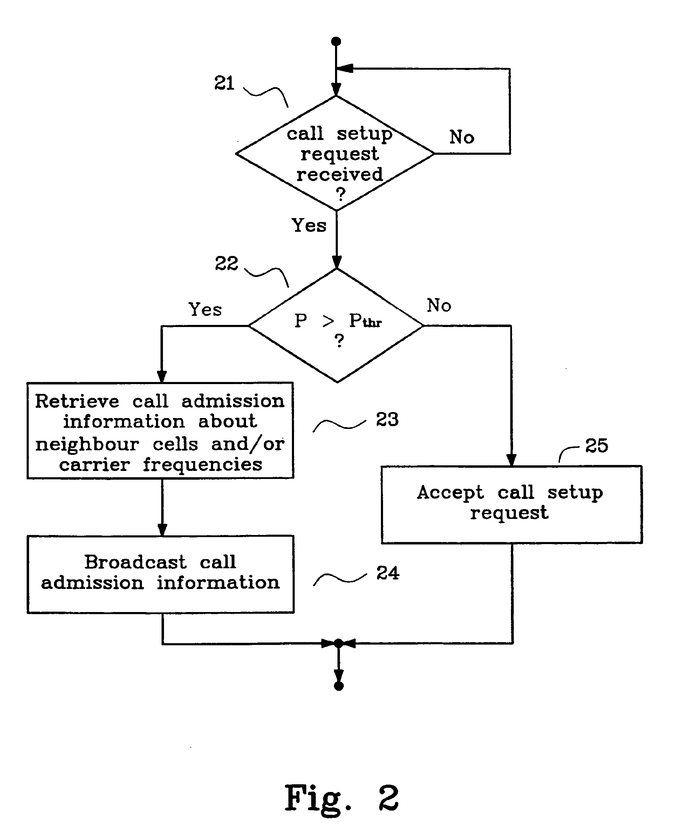

Figure 2 shows a flowchart which illustrates the method of the present invention as being carried out in a base station. When a request for a call setup is received, block 21, it is investigated, block 22, if the total interference level P exceeds a threshold level $P_{thr}$. If so ("No" at block 22) the radio base station serving the cell will accept requests for a call setup, block 25, in said cell as long as the total interference level in this cell is below said threshold level. However, when the total uplink interference level exceeds said threshold level $P_{thr}$ ("Yes" in block 22) the cell must guard itself against congestions, e.g., due to a too high number of new accepted calls. Therefore, a user equipment sending a call setup request in such a cell must in advance be provided with additional relevant information that indicates whether its request will be accepted in said cell. This additional call admission information can be applied by the user equipment to establish a connection, i.e. contribute to an increasing system capacity, while, at the same time, direct its call setup request to a cell or a carrier frequency such that an inadmissible increase of the uplink interference level due to this call setup is avoided. Said call admission information is about neighbour cells and/or carrier frequencies. The call admission information also includes congestion status information for said cells and frequencies with respect to a certain geographical area, e.g. the congested cell. The information is preferably retrieved, block 23, from a centralised control unit, e.g. the radio network controller RNC, to which the radio base stations of a number of neighboured cells are connected. Thus, the RNC must contain a list that indicates the neighbour cells of each cell and the carrier frequencies that are used in these cells. It must also contain said congestion status information. Additionally, the RNC must be capable to retrieve this information for cells that belong to another RNC. Then, a radio base station serving a momentarily congested cell can retrieve the necessary information by using said list in order to create and broadcast a message indicating call admission information to the user equipments in said cell. The information can be presented either by means of restricted accesses or by means of permitted accesses for the user equipments with regard to the congested cell and those neighbour cells using the same or another carrier frequency. The radio base station of a congested cell sends this call admission information on its broadcast channel, block 24. Said additional call admission information, which is an object of the present invention, can refer to a restricted or permitted access either for other carrier frequencies or for other cells using the same carrier frequency. Alternatively, the call admission information in a congested cell simply contains a list comprising carrier frequency and congestion status for each neighbour cell.

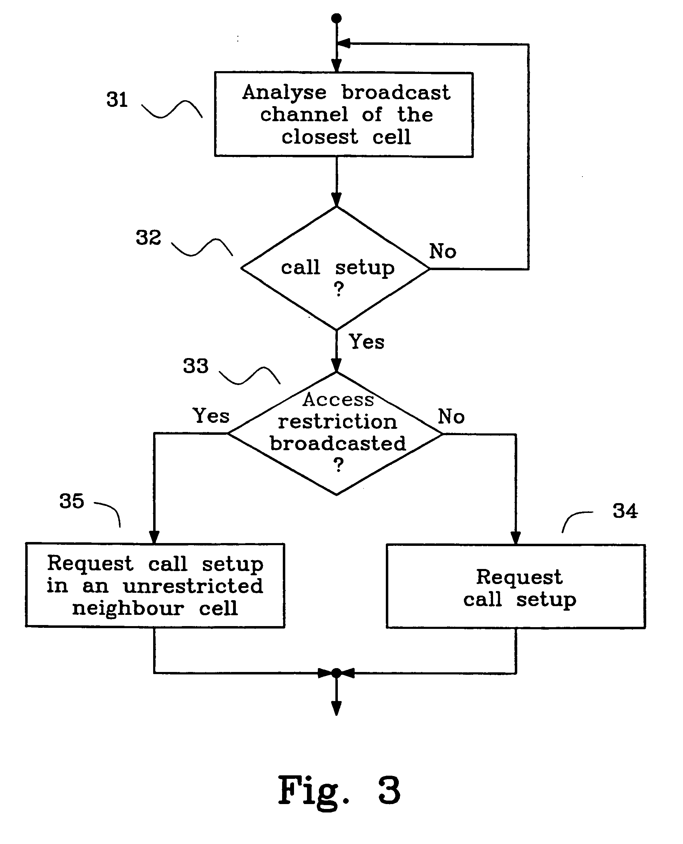

Figure 3 shows the corresponding steps of the method according to the present invention from the point of view of a user equipment. A user equipment will in an idle mode constantly listen to the broadcast channel of the cell that it receives best and analyse the received call admission information, block 31. A call setup request from a user equipment ("Yes" in block 32) for this cell will be accepted, block 34, as long as the broadcasted call admission information indicates that there are no call setup restrictions for the cell ("No" in block 33). No access restrictions means that the interference level in the cell is below the threshold level $P_{thr}$. If the broadcast channel however contains an indication that access for new calls momentarily is denied in this cell ("Yes" in block 33), e.g., caused by a congestion due to a too high number of user equipments within the cell, the user equipment will most likely intend to request for a call setup in one of the other accessible cells. The call setup attempt of the user equipment will probably succeed if there is no congestion reported in at least one of these substitute candidate cells. However, if the selected substitute cell uses the same carrier frequency as the congested cell, the user equipment will still contribute to the interference level in the congested cell because it is physically still located in that cell. It will probably cause even more interference than it would have caused if the call had been accepted in the congested cell since the neighbour cell is located further away and thereby demand an even higher uplink power level from the user equipment. This problem is overcome by means of the method according to the present invention providing, i.a., the step of broadcasting call admission information that is not generated with the main focus on the congested cell as the restriction criterion but instead with focus on the carrier frequency that momentarily contains a too high level of interference within the accessible area of the user equipment. The broadcasted message then contains, e.g., additional information about those cells within the accessible area that use the congested carrier frequency. By this means, the user equipment will be prohibited from initiating a call setup to said cells and, thus, avoid a situation where the user equipment causes an increasing interference level in a cell while establishing a connection in another cell. Instead, the request for a call setup is performed in an unrestricted neighbour cell in the accessible area of the user equipment, block 35, said cell using a carrier frequency without congestions.

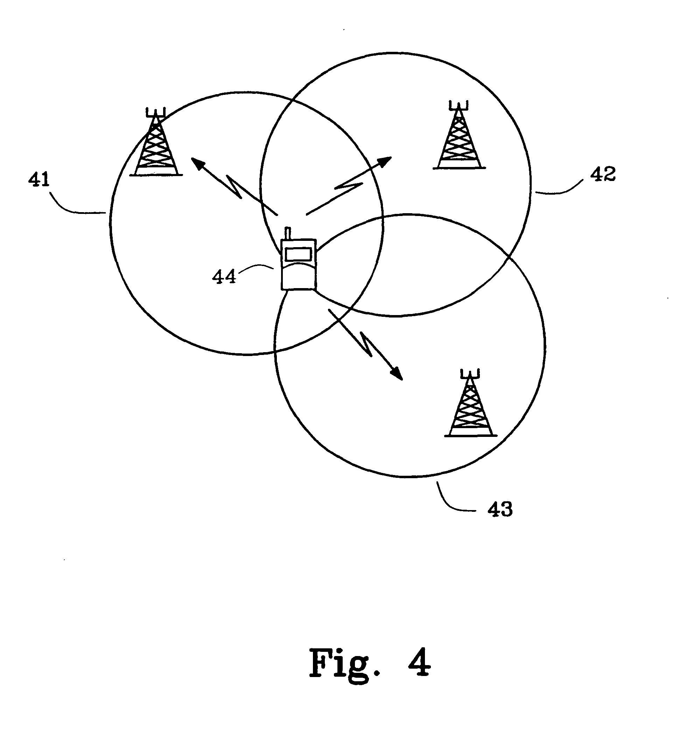

Figure 4 demonstrates by means of an example the various steps for a call setup according to the method of the present invention. Said method is applicable if a user equipment 44 is located such it can connect to more than one cell that are served by one or more radio base stations. In this example a user equipment is located such that it can establish a connection to either of cells 41, 42, or 43. For the uplink signal transmission, each of said cells use a certain frequency carrier. Here, it is supposed that cells 41 and 42 use the same carrier frequency $f_1$ while cell 43 uses a different carrier frequency $f_2$ and that the user equipment 44 receives downlink signals best from the radio base station serving cell 41. If cell 41 momentarily suffers from a congestion, a restricted access message is broadcasted for this cell indicating that a call setup is neither permitted in the congested cell 41 nor, according to the present invention, in the neighboured cell 42 using the same carrier frequency $f_1$ as cell 41. Instead, the user equipment 44 can try to establish a connection to the other neighbour cell 43 using another carrier frequency $f_2$. Thus, as long as 43 does not suffer from a congestion, a call setup is possible for a user equipment located in the congested cell 41 without increasing the interference level of that cell.

## Claims

1. A method for congestion control at call set up in the cells ($C_1$-$C_6$;$C_7$-$C_9$) of a cellular telecommunication system comprising a plurality of radio base stations ($RBS_1$-$RBS_3$) each of which serving one or more of said cells and at least one of said cells being congested; a plurality of user equipments ($UE_1$-$UE_4$) at least one of which is located in a congested cell; and at least one centralised control unit (RNC) to which said radio base stations are connected,
   **characterized by**

   a) defining a power threshold value (Pthr) for the total interference level of said congested cell (C3);
   b) comparing (22) the total uplink interference level with said threshold value, and if said total uplink interference level exceeds said threshold value;
   c) retrieving (23) call admission information about at least one neighbouring cell which is ready to accept a call set up request from said user equipment (UE3); and
   d) broadcasting (24) said call admission information.

2. The method according to claim 1, whereby the broadcasted call admission information is provided to the user equipments in a congested cell by indicating restricted accesses for at least one of the carrier frequencies.

3. The method according to claim 1, whereby the broadcasted call admission information is provided to the user equipments in a congested cell by indicating permitted accesses for at least one of the carrier frequencies.

4. The method according to claim 2 or 3, whereby the broadcasted call admission information for a carrier frequency is provided for the set of neighboured cells that applies said carrier frequency.

5. The method according to claim 1, whereby the broadcasted call admission information is provided to a congested cell by means of a list comprising the carrier frequencies for each of its neighboured cells.

6. The method according to claim 5, whereby said list also comprises the congestion status for at least one of the neighbouring cells.

7. The method according to any of the preceding claims, whereby call admission information is retrieved from the radio network controller as the centralised control unit.

8. The method according to any of the preceding claims, whereby said call admission information is stored in the radio base stations.

9. A method for congestion control at call set up in the cells ($C_1$-$C_6$;$C_7$-$C_9$) of a cellular telecommunication system comprising a plurality of radio base stations ($RBS_1$-$RBS_3$) each of which serving one or more of said cells and at least one of said cells being congested; a plurality of user equipments ($UE_1$-$UE_4$) at least one of which is located in a congested cell; and at least one centralised control unit (RNC) to which said radio base stations are connected,
   **characterized by**

   a) analysing (31) a received and broadcasted call admission information for a certain cell, said information being call admission information about at least one neighbouring unrestricted cell which is ready to accept a call set up request; and
   b) requesting (35) a call set-up in an unrestricted neighbour cell if access restriction is broadcasted (33) for said cell, based on said information.

## Patentansprüche

1. Verfahren zur Überlaststeuerung beim Gesprächsverbindungsaufbau in den Zellen ($C_1$ - $C_6$; $C_7$ - $C_9$) eines zellularen Telekommunikationssystems, das folgendes umfaßt: eine Vielzahl von Funkbasisstationen ($RBS_1$ - $RBS_3$), von denen jede eine oder mehrere der Zellen versorgt, und wobei mindestens eine der Zellen überlastet ist; eine Vielzahl von Teilnehmereinrichtungen (UE$_1$ - UE$_4$), von denen sich mindestens eine in einer überlasteten Zelle befindet; und mindestens eine zentralisierte Steuerungseinheit (RNC), mit der die Funkbasisstationen verbunden sind,

**gekennzeichnet durch**:

a) Definieren eines Leistungsschwellwerts (P$_{thr}$) für den Gesamtstörpegel der überlasteten Zelle (C$_3$);

b) Vergleichen (22) des Aufwärtsstrecken-Gesamtstörpegels mit dem Schwellwert, und wenn der Aufwärtsstrecken-Gesamtstörpegel den Schwellwert überschreitet:

c) Abrufen (23) von Gesprächsverbindungszulassungsinformation über mindestens eine Nachbarzelle, die bereit ist, eine Gesprächsverbindungsaufbauanforderung von der Teilnehmereinrichtung (UE$_3$) entgegenzunehmen; und

d) Rundsenden (24) der Gesprächsverbindungszulassungsinformation.

2. Verfahren nach Anspruch 1, wobei die rundgesendete Gesprächsverbindungszulassungsinformation an die Teilnehmereinrichtungen in einer überlasteten Zelle übergeben wird, indem auf beschränkte Zugriffe für mindestens eine der Trägerfrequenzen hingewiesen wird.

3. Verfahren nach Anspruch 1, wobei die rundgesendete Gesprächsverbindungszulassungsinformation an die Teilnehmereinrichtungen in einer überlasteten Zelle übergeben wird, indem auf erlaubte Zugriffe für mindestens eine der Trägerfrequenzen hingewiesen wird.

4. Verfahren nach Anspruch 2 oder 3, wobei die rundgesendete Gesprächsverbindungszulassungsinformation für eine Trägerfrequenz bereitgestellt wird für die Menge von Nachbarzellen, die diese Trägerfrequenz anwendet.

5. Verfahren nach Anspruch 1, wobei die rundgesendete Gesprächsverbindungszulassungsinformation einer überlasteten Zelle mittels einer Liste bereitgestellt wird, welche die Trägerfrequenzen für jede ihrer Nachbarzellen umfaßt.

6. Verfahren nach Anspruch 5, wobei die Liste außerdem den Überlastungsstatus für mindestens eine der Nachbarzellen umfaßt.

7. Verfahren nach einem der vorhergehenden Ansprüche, wobei Gesprächsverbindungszulassungsinformation vom Funknetzcontroller als der zentralisierten Steuerungseinheit abgerufen wird.

8. Verfahren nach einem der vorhergehenden Ansprüche, wobei die Gesprächsverbindungszulassungsinformation in den Funkbasisstationen gespeichert wird.

9. Verfahren zur Überlaststeuerung beim Gesprächsverbindungsaufbau in den Zellen (C$_1$ - C$_6$; C$_7$ - C$_9$) eines zellularen Telekommunikationssystems, das folgendes umfaßt: eine Vielzahl von Funkbasisstationen (RBS$_1$ - RBS$_3$), von denen jede eine oder mehrere der Zellen versorgt, und wobei mindestens eine der Zellen überlastet ist; eine Vielzahl von Teilnehmereinrichtungen (UE$_1$ - UE$_4$), von denen sich mindestens eine in einer überlasteten Zelle befindet; und mindestens eine zentralisierte Steuerungseinheit (RNC), mit der die Funkbasisstationen verbunden sind,

**gekennzeichnet durch**:

a) Analysieren (31) einer empfangenen und rundgesendeten Gesprächsverbindungszulassungsinformation für eine bestimmte Zelle, wobei die Information Gesprächsverbindungszulassungsinformation über mindestens eine nichtbeschränkte Nachbarzelle ist, die bereit ist, eine Gesprächsverbindungsaufbauanforderung entgegenzunehmen; und

b) auf der Grundlage der Information, Anfordern (35) eines Gesprächsverbindungsaufbaus in einer nichtbeschränkten Nachbarzelle, wenn für die Zelle eine Zugangsbeschränkung rundgesendet wird (33).

## Revendications

1. Procédé de contrôle d'encombrement lors de l'établissement d'appel dans les cellules (C$_1$-C$_6$ ; C$_7$-C$_9$) d'un système de télécommunication cellulaire comprenant une pluralité de stations de base radio (RBS$_1$-RBS$_3$), chacune d'elles desservant une ou plusieurs desdites cellules et au moins une desdites cellules étant encombrée ; une pluralité d'équipements d'utilisateur (UE$_1$-UE$_4$) dont au moins un est situé dans une cellule encombrée ; et au moins une unité de commande centralisée (RNC) à laquelle lesdites stations de base radio sont connectées,

**caractérisé par** les étapes consistant à :

a) définir une valeur seuil de puissance (Pthr) pour le niveau d'interférence total de ladite cellule encombrée (C3) ;

b) comparer (22) le niveau d'interférence de liaison montante total à ladite valeur seuil et, si ledit niveau d'interférence de liaison montante total dépasse ladite valeur seuil;

c) récupérer (23) des informations d'admission d'appel concernant au moins une cellule avoisinante qui est prête à accepter une demande d'établissement d'appel provenant dudit équipement d'utilisateur (UE3) ; et

d) diffuser (24) lesdites informations d'admission d'appel.

2. Procédé selon la revendication 1, par lequel les informations d'admission d'appel diffusées sont délivrées aux équipements d'utilisateur dans une cellule encombrée en indiquant des accès restreints pour au moins une des fréquences porteuses.

3. Procédé selon la revendication 1, par lequel les informations d'admission d'appel diffusées sont délivrées aux équipements d'utilisateur dans une cellule encombrée en indiquant des accès autorisés pour au moins une des fréquences porteuses.

4. Procédé selon la revendication 2 ou la revendication 3, par lequel les informations d'admission d'appel diffusées pour une fréquence porteuse sont délivrées pour l'ensemble de cellules avoisinantes qui applique ladite fréquence porteuse.

5. Procédé selon la revendication 1, par lequel les informations d'admission d'appel diffusées sont délivrées à une cellule encombrée au moyen d'une liste comprenant les fréquences porteuses pour chacune de ses cellules avoisinantes.

6. Procédé selon la revendication 5, par lequel ladite liste comprend également l'état d'encombrement pour au moins une des cellules avoisinantes.

7. Procédé selon l'une quelconque des revendications précédentes, par lequel les informations d'admission d'appel sont récupérées depuis le contrôleur de réseau radio ainsi que l'unité de commande centralisée.

8. Procédé selon l'une quelconque des revendications précédentes, par lequel lesdites informations d'admission d'appel sont stockées dans les stations de base radio.

9. Procédé de contrôle d'encombrement lors de l'établissement d'appel dans les cellules ($C_1$-$C_6$ ; $C_7$-$C_9$) d'un système de télécommunication cellulaire comprenant une pluralité de stations de base radio ($RBS_1$-$RBS_3$), chacune d'elles desservant une ou plusieurs desdites cellules et au moins une desdites cellules étant encombrée ; une pluralité d'équipements d'utilisateur ($UE_1$-$UE_4$) dont au moins un est situé dans une cellule encombrée ; et au moins une unité de commande centralisée (RNC) à laquelle lesdites stations de base radio sont connectées, **caractérisé par** les étapes consistant à :

a) analyser (31) des informations d'admission d'appel reçues et diffusées pour une certaine cellule, lesdites informations étant des informations d'admission d'appel concernant au moins une cellule non restreinte avoisinante qui est prête à accepter une demande d'établissement d'appel ; et

b) demander (35) un établissement d'appel dans une cellule non restreinte avoisinante si la restriction d'accès est diffusée (33) pour ladite cellule, en se basant sur lesdites informations.

Fig. 1

21

**call setup request received ?** — No

Yes

22

Yes — **P > P_thr ?** — No

23

Retrieve call admission information about neighbour cells and/or carrier frequencies

25

Accept call setup request

24

Broadcast call admission information

# Fig. 2

**Fig. 3**

**Fig. 4**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- GB 2260242 A